# EUROPÄISCHE PATENTSCHRIFT

(11) **EP 2 535 546 B1**
(45) Veröffentlichungstag und Bekanntmachung des Hinweises auf die Patenterteilung: **08.10.2014**
(21) Anmeldenummer: 12170885.3
(22) Anmeldetag: 05.06.2012
(51) Int. Cl.: F02G 1/055, F02G 1/047, F24H 8/00, F24H 1/43

(54) **Kraft-Wärme-Kopplungsanlage**
Combined heat and power device
Installation de production combinée de chaleur et d'électricité

(30) Priorität: 16.06.2011 DE 102011106617
(43) Veröffentlichungstag der Anmeldung: 19.12.2012
(73) Patentinhaber: Viessmann Werke GmbH & Co. KG, 35108 Allendorf (DE)
(72) Erfinder: Eitzenhöfer, Stefan, 35099 Burgwald (DE); Frank, Wilfried, 35114 Haina (DE)
(74) Vertreter: Wolf, Michael

(56) Entgegenhaltungen:
- WO-A1-02/14671
- DE-A1- 19 951 217
- JP-A- 58 221 340
- US-A- 5 711 232
- US-A1- 2002 084 065
- US-A1- 2006 026 835

## Beschreibung

Die Erfindung betrifft eine Kraft-Wärme-Kopplungsanlage gemäß dem Oberbegriff des Patentanspruchs 1.

Eine Kraft-Wärme-Kopplungsanlage der eingangs genannten Art ist nach US 5 711 232 A bekannt. In dieser Schrift wird eine Anlage beschrieben, welche eine Brennkammer zur Verbrennung sowohl fester als auch fluider Brennstoffe aufweist. Dabei ist der Brennkammer in Hauptströmungsrichtung gesehen in bekannter Weise ein Abgaszug zur Abfuhr eines bei der Verbrennung entstandenen Abgases nachgeschaltet. Außerdem weist diese Anlage einen Heißgasmotor, nämlich einen Stirlingmotor, mit einem zum Wärmeaustausch mit dem Abgas ausgebildeten Erhitzerkopf auf. Dieser ist in Form von in den Abgaszug reichenden Röhren ausgebildet.

Weiterhin wird darauf verwiesen, dass eine Kraft-Wärme-Kopplungsanlage ähnlich der eingangs genannten Art von der schweizer Firma Hovalwerk AG unter der Bezeichnung AgroLyt - Stirling BHKW gebaut und angeboten wird. Diese Anlage besteht aus einem Heizkessel mit einer Brennkammer zur Verbrennung eines Brennstoffs, und zwar in diesem Fall eines Biomasse-Festbrennstoffs, nämlich Holz. Dabei ist der Brennkammer in Hauptströmungsrichtung gesehen in bekannter Weise ein Abgaszug zur Abfuhr eines bei der Verbrennung entstandenen Abgases nachgeschaltet. Außerdem weist diese Anlage einen Heißgasmotor, nämlich einen Stirlingmotor, mit einem zum Wärmeaustausch mit dem Abgas ausgebildeten Erhitzerkopf auf. Dieser Erhitzerkopf ist bei dieser Anlage im unteren Bereich der Brennkammer, in Hauptströmungsrichtung des Abgases gesehen vor dem Abgaszug angeordnet.

Der Erfindung liegt die Aufgabe zugrunde, eine Kraft-Wärme-Kopplungsanlage der eingangs genannten Art zu verbessern, und zwar insbesondere unter dem Aspekt einer kompakteren Bauform und damit einhergehend einer effizienteren Wärmenutzung mit Hilfe des Stirlingmotors.

Diese Aufgabe ist mit einer Kraft-Wärme-Kopplungsanlage der eingangs genannten Art durch die im Kennzeichen des Patentanspruchs 1 aufgeführten Merkmale gelöst.

Nach der Erfindung ist also vorgesehen, dass am anderen Ende der Brennkammer der Erhitzerkopf angeordnet ist.

Es ist dabei dafür gesorgt, dass das bei der Verbrennung entstehende Abgas erst nach der Passage des Abgaszuges, der - was weiter unten noch erläutert wird - besonders bevorzugt als Wärmetauscher ausgebildet ist, (direkt) mit dem Erhitzerkopf in Kontakt kommt. Hierdurch ist erheblich besser dafür gesorgt, dass der zur Oberflächenvergrößerung vorzugsweise mit einer Vielzahl von Wärmeübertragungslamellen versehene Erhitzerkopf nicht verschmutzt und dadurch in seinem Wirkungsgrad nicht beeinträchtigt wird. Die Zwischenschaltung des Abgaszuges zwischen die Brennkammer und den Erhitzerkopf hat somit zur Folge, dass sich mögliche Verbrennungsrückstände vor dem Erreichen des Erhitzerkopfes im Abgaszug absetzen können. Die Reinigung des Abgaszuges ist erheblich einfacher als die Reinigung des geometrisch komplexen Erhitzerkopfes des Heißgasmotors.

Bezüglich der Maßgabe, dass der Erhitzerkopf dem Abgaszug nachgeschaltet ist, wird darauf hingewiesen, dass neben dem insofern ersten Abgaszug (oder auch Primärwärmetauscher) regelmäßig auch ein zweiter Abgaszug (oder auch Sekundärwärmetauscher) vorgesehen ist, der wiederum in Hauptströmungsrichtung gesehen dem Erhitzerkopf nachgeschaltet ist. Wesentlich ist also, dass der Erhitzerkopf nicht wie beim eingangs genannten Stand der Technik unmittelbar in oder jedenfalls am Ausgang der Brennkammer angeordnet ist, da mögliche Verbrennungsrückstände in diesem Fall direkt die Wärmeübertragungslamellen am Erhitzerkopf verschmutzen, sondern erst nach einem (gegebenenfalls ersten) Abgaszug.

Andere vorteilhafte Weiterbildungen ergeben sich aus den abhängigen Patentansprüchen.

Die erfindungsgemäße Kraft-Wärme-Kopplungsanlage einschließlich ihrer vorteilhaften Weiterbildungen gemäß der abhängigen Patentansprüche wird nachfolgend anhand der zeichnerischen Darstellung eines bevorzugten Ausführungsbeispiels näher erläutert.

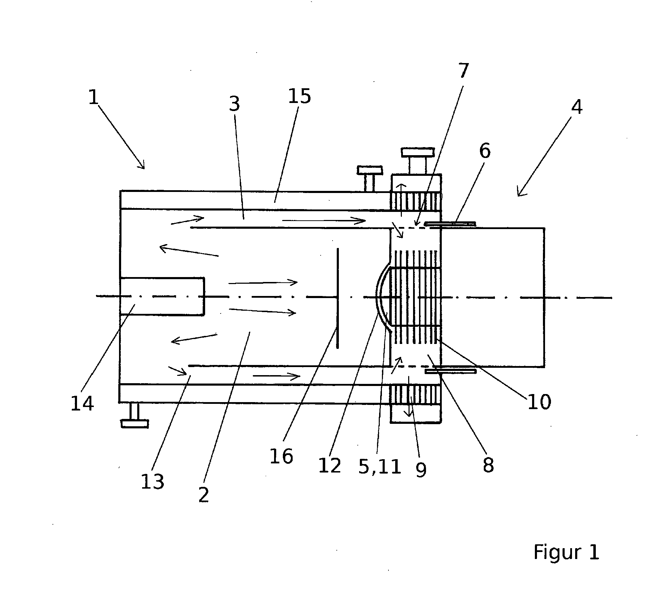

Es zeigt
- Figur 1: schematisch und im Schnitt die erfindungsgemäße Kraft-Wärme-Kopplungsanlage.

Die in der einzigen Figur 1 dargestellte Kraft-Wärme-Kopplungsanlage besteht zunächst in bekannter Weise aus einem Heizkessel 1 mit einer Brennkammer 2 zur Verbrennung eines Brennstoffs. Dieser Brennkammer 2 ist in Hauptströmungsrichtung (durch Pfeile angedeutet) gesehen ein Abgaszug 3 zur Abfuhr eines bei der Verbrennung entstandenen Abgases nachgeschaltet. Außerdem besteht die Kraft-Wärme-Kopplungsanlage aus einem Heißgasmotor 4 (insbesondere Stirlingmotor) mit einem zum Wärmeaustausch mit dem Abgas ausgebildeten Erhitzerkopf 5.

Bei der erfindungsgemäßen Kraft-Wärme-Kopplungsanlage ist als Brennstoff die Verwendung eines fluiden Brennstoffs vorgesehen, und zwar insbesondere Öl, aber auch Gas.

Wie aus Figur 1 ersichtlich, ist dazu an einem Ende der Brennkammer 2 ein Brenner 14 und am anderen Ende der Brennkammer 2 der Erhitzerkopf 5 angeordnet. Noch etwas genauer betrachtet, ist die Brennkammer 2 zylindrisch ausgebildet, wobei an einer Stirnseite der Brenner 14 und an der anderen Stirnseite der Erhitzerkopf 5 angeordnet ist.

Ferner ist vorgesehen, dass der Erhitzerkopf 5 dem Abgaszug 3 in Hauptströmungsrichtung des Abgases gesehen nachgeschaltet ausgebildet ist.

Wie bereits erläutert, ist auf diese Weise gewährleistet, dass sich Verbrennungsrückstände auf dem Weg zum Erhitzerkopf 5 im Abgaszug 3 absetzen können, so dass eine Verschmutzung des Erhitzerkopfes 5 vermieden werden kann.

Dies gilt umso mehr, wenn der Erhitzerkopf 5, wie bevorzugt und in Figur 1 dargestellt, zur Oberflächenvergrößerung (in an sich bekannter Weise) eine Vielzahl von Wärmeübertragungslamellen 10 (auch Finnen genannt) aufweist, denn insbesondere solche Finnen verschmutzen relativ schnell, was aber zu vermeiden ist, um einen guten Wirkungsgrad des Heißgasmotors zu gewährleisten.

Weiterhin ist bevorzugt vorgesehen, dass die Wärmeübertragungslamellen 10 kranzartig um einen lamellenfreien, vorzugsweise kalottenförmigen Oberflächenbereich 11 des Erhitzerkopfes 5 angeordnet sind. Dieser lamellenfreie Oberflächenbereich 11 des Erhitzerkopfes 5 ist dabei, wie Figur 1 zeigt, mit einer Außenseite einer vorzugsweise ebenfalls kalottenförmigen Brennkammerwandung 12 thermisch in Verbindung stehend ausgebildet. Unter "thermisch in Verbindung stehend" ist dabei zu verstehen, dass sich wahlweise der Oberflächenbereich 11 und die Brennkammerwandung 12 direkt berühren oder jedenfalls ein Material (wie Vlies, Edelstahlwolle oder dergleichen) zwischen den beiden Bauteilen angeordnet ist, das für eine gute Wärmeübertragung sorgt.

Ferner ist vorgesehen, dass die Brennkammer 2 erhitzerkopfabgewandt mit mindestens einer Öffnung 13 zum Abgaszug 3 versehen ist. Dabei ist der Abgaszug 3 als die Brennkammer 2 mindestens teilweise umschließender Ringspaltraum und mindestens teilweise mit einem wasserführenden Raum 15 thermisch in Verbindung stehend ausgebildet, wobei der wasserführende Raum 15 besonders bevorzugt und wie dargestellt als Ringspaltraum den Abgaszug 3 mindestens teilweise umschließend ausgebildet ist. Auf diese Weise ergibt sich, dass der Abgaszug 3 in an sich bekannter Weise als Wärmeaustauscher, und zwar als Primärwärmetauscher, ausgebildet ist.

Wie weiterhin aus Figur 1 ersichtlich, sind Hauptlängsachsen der Brennkammer 2, des Abgaszuges 3 und des Heißgasmotors 4 parallel zueinander verlaufen, hier sogar aufeinanderliegend, ausgebildet.

Ein weiteres wesentliches Merkmal der erfindungsgemäßen Kraft-Wärme-Kopplungsanlage besteht darin, dass zur Unterbindung eines Wärmeaustausches zwischen dem Abgas und dem Erhitzerkopf 5 ein Absperrelement 6 zwischen dem Abgaszug 3 und dem Erhitzerkopf 5 angeordnet ist. Wie aus Figur 1 ersichtlich, ist dazu der Erhitzerkopf 5 von einer mit Öffnungen 7 versehenen Kammer 8 umschlossen ausgebildet, wobei der Abgaszug 3 über die Öffnungen 7 mit der Kammer 8 verbindbar ausgebildet ist. Das Absperrelement 6 ist somit zum bedarfsweisen Verschließen (hierauf wird weiter unten noch eingegangen) der Öffnungen 7 vorgesehen. Hierzu ist das Absperrelement 6 (was in Figur 1 nicht näher dargestellt ist) wahlweise temperaturabhängig selbsttätig (zum Beispiel über ein Bimetall) oder über ein (mechanisches bzw. elektromechanisches) Stellglied betätigbar ausgebildet.

Wie bereits eingangs erläutert, ist wie in Figur 1 dargestellt bevorzugt vorgesehen, dass der Erhitzerkopf 5 des Heißgasmotors 4 zwischen dem Abgaszug 3 und einem Nachschaltwärmetauscher 9 (Sekundärwärmetauscher bzw. zweiter Abgaszug) angeordnet ist. Dieser Nachschaltwärmetauscher 9 ist dabei am erhitzerkopfseitigen Ende der Brennkammer 2 angeordnet und als schraubenförmig gewickelter Wendelspaltwärmetauscher, den Erhitzerkopf 5 mindestens teilweise umschließend und (wie bei der WO 2007/079730 A1) vom Abgas radial von innen nach außen durchströmbar ausgebildet.

Die erfindungsgemäße Kraft-Wärme-Kopplungsanlage funktioniert wie folgt: Mit dem Brenner 14 wird ein fluider Brennstoff, insbesondere Öl, verbrannt. Das dabei entstehende Abgas strömt in Figur 1 von links nach rechts in die Brennkammer 2. Bei Bedarf kann (muss aber nicht), wie dargestellt zwischen dem Brenner 14 und dem erhitzerkopfseitigen Ende der Brennkammer 2 ein Strömungsumlenkelement 16 angeordnet sein. Mit diesem Strömungsumlenkelement 16 kann die Wärmebeaufschlagung der dem Brenner 14 gegenüberliegenden Stirnseite der Brennkammer 2 beeinflusst werden. Dies kann erforderlich sein, falls nicht die maximale Wärmemenge auf die Brennkammerwandung 12 und damit auf den lamellenfreien Oberflächenbereich 11 des Erhitzerkopfes 5 übertragen werden soll.

Nach der Umlenkung am Strömungsumlenkelement 16 oder an der Brennkammerrückwand strömt das Abgas als Mantelströmung zurück in Richtung Brenner 14 wird im Bereich des Brenners 14 umgelenkt und durch die als Ringspalt ausgebildete Öffnung 13 in den Abgaszug 3 geleitet. Da der Abgaszug 3 von einem vom Heizkreiswasser durchströmten Raum 15 umschlossen ist, wird das Abgas beim Passieren des Abgaszuges 3, der somit als Primärwärmetauscher dient, abgekühlt.

Am Ende des Abgaszuges 3 wird das Abgas auf jeden Fall durch den Nachschaltwärmetauscher 9 (zweiter Abgaszug) geleitet, um dort nochmals weiter abgekühlt zu werden. Je nach Stellung des Absperrelements 6 kann das Abgas aber auch in die Kammer 8 strömen, in der sich der mit Wärmeübertragungslamellen 10 versehene Erhitzerkopf 5 befindet. In Figur 1 sind dabei die Öffnungen 7 zu etwa 1/4 bis 1/3 geschlossen. Über die Stellung des Absperrelements 6 kann dabei beeinflusst werden, wieviel Wärme auf den Erhitzerkopf 5 übertragen wird.

Verwendet man einen in seiner Brennerleistung einstellbaren Brenner 14, so ist vorgesehen, dass das Absperrelement 6 die Öffnungen 7 bei niedriger Leistung frei gibt, d. h. das heiße Abgas kann seine Wärme an die Kammer 8 und damit an die Wärmeübertragungslamelle 10 abgegeben. Wird der Brenner 14 dagegen mit höherer Leistung betrieben, so wird der Zugang zur Kammer 8 mit dem Absperrelement 6 verschlossen, denn dem Erhitzerkopf 5 wird bereits über die Rückwand der Brennkammer (Brennkammerwandung 12) genug Wärme zugeführt, um einen konstanten Heißgasmotorbetrieb zu gewährleisten.

### Bezugszeichenliste

- 1: Heizkessel
- 2: Brennkammer
- 3: Abgaszug
- 4: Heißgasmotor
- 5: Erhitzerkopf
- 6: Absperrelement
- 7: Öffnung
- 8: Kammer
- 9: Nachschaltwärmetauscher
- 10: Wärmeübertragungslamelle
- 11: Oberflächenbereich
- 12: Brennkammerwandung
- 13: Öffnung
- 14: Brenner
- 15: Raum
- 16: Strömungsumlenkelement

## Patentansprüche

1. Kraft-Wärme-Kopplungsanlage, umfassend einen Heizkessel (1) mit einer Brennkammer (2) zur Verbrennung eines Brennstoffs, wobei der Brennkammer (2) in Hauptströmungsrichtung gesehen ein Abgaszug (3) zur Abfuhr eines bei der Verbrennung entstandenen Abgases nachgeschaltet ist, und einen Heißgasmotor (4) mit einem zum Wärmeaustausch mit dem Abgas ausgebildeten Erhitzerkopf (5), wobei der Erhitzerkopf (5) dem Abgaszug (3) in Hauptströmungsrichtung des Abgases gesehen nachgeschaltet ausgebildet ist, wobei an einem Ende der Brennkammer (2) ein Brenner (14) angeordnet ist,
**dadurch gekennzeichnet,**
**dass** am anderen Ende der Brennkammer (2) der Erhitzerkopf (5) angeordnet ist.

2. Kraft-Wärme-Kopplungsanlage nach Anspruch 1,
**dadurch gekennzeichnet,**
**dass** zur Unterbindung eines Wärmeaustausches zwischen dem Abgas und dem Erhitzerkopf (5) ein Absperrelement (6) zwischen dem Abgaszug (3) und dem Erhitzerkopf (5) angeordnet ist.

3. Kraft-Wärme-Kopplungsanlage nach Anspruch 1 oder 2,
**dadurch gekennzeichnet,**
**dass** der Erhitzerkopf (5) von einer mit Öffnungen (7) versehenen Kammer (8) umschlossen ausgebildet ist.

4. Kraft-Wärme-Kopplungsanlage nach Anspruch 3,
**dadurch gekennzeichnet,**
**dass** der Abgaszug (3) über die Öffnungen (7) mit der Kammer (8) verbindbar ausgebildet ist.

5. Kraft-Wärme-Kopplungsanlage nach einem der Ansprüche 1 bis 4,
**dadurch gekennzeichnet,**
**dass** der Erhitzerkopf (5) des Heißgasmotors (4) zwischen dem Abgaszug (3) und einem Nachschaltwärmetauscher (9) angeordnet ist.

6. Kraft-Wärme-Kopplungsanlage nach Anspruch 5,
**dadurch gekennzeichnet,**
**dass** der Nachschaltwärmetauscher (9) am erhitzerkopfseitigen Ende der Brennkammer (2) angeordnet ist.

7. Kraft-Wärme-Kopplungsanlage nach einem der Ansprüche 1 bis 6,
**dadurch gekennzeichnet,**
**dass** der Erhitzerkopf (5) zur Oberflächenvergrößerung eine Vielzahl von Wärmeübertragungslamellen (10) aufweist.

8. Kraft-Wärme-Kopplungsanlage nach Anspruch 7,
**dadurch gekennzeichnet,**
**dass** die Wärmeübertragungslamellen (10) kranzartig um einen lamellenfreien Oberflächenbereich (11) des Erhitzerkopfes (5) angeordnet sind.

9. Kraft-Wärme-Kopplungsanlage nach Anspruch 7 oder 8,
**dadurch gekennzeichnet,**
**dass** der lamellenfreie Oberflächenbereich (11) des Erhitzerkopfes (5) mit einer Außenseite einer Brennkammerwandung (12) thermisch in Verbindung stehend ausgebildet ist.

10. Kraft-Wärme-Kopplungsanlage nach einem der Ansprüche 1 bis 9,
**dadurch gekennzeichnet,**
**dass** die Brennkammer (2) erhitzerkopfabgewandt mit einer Öffnung (13) zum Abgaszug (3) versehen ist.

## Claims

1. A combined heat and power plant, comprising a heating boiler (1) with a combustion chamber (2) for combusting a fuel, wherein, viewed in the main flow direction, an exhaust flue (3) for discharging exhaust gas resulting from the combustion is arranged downstream of the combustion chamber (2), and a hot gas engine (4) with a heater head (5) formed for heat exchange with the exhaust gas, wherein, viewed in the main flow direction of the exhaust gas, the heater head (5) is formed to be arranged downstream of the exhaust flue (3), wherein at one end of the combustion chamber (2), a burner (14) is arranged,
**characterized in**
**that** at the other end of the combustion chamber (2), the heater head (5) is arranged.

2. The combined heat and power plant according to claim 1,
**characterized in**
**that** for preventing heat exchange between the exhaust gas and the heater head (5), a shut-off element (6) is arranged between the exhaust flue (3) and the heater head (5).

3. The combined heat and power plant according to claim 1 or claim 2,
**characterized in**
**that** the heater head (5) is formed to be enclosed by a chamber (8) that is provided with openings (7).

4. The combined heat and power plant according to claim 3,
**characterized in**
**that** the exhaust flue (3) is formed to be connectable to the chamber (8) via the openings (7).

5. The combined heat and power plant according to any one of the claims 1 to 4,
**characterized in**
**that** the heater head (5) of the hot gas engine (4) is arranged between the exhaust flue (3) and a downstream heat exchanger (9).

6. The combined heat and power plant according to claim 5,
**characterized in**
**that** the downstream heat exchanger (9) is arranged at the heater head side at the end of the combustion chamber (2).

7. The combined heat and power plant according to any one of the claims 1 to 6,
**characterized in**
**that** the heater head (5) has a multiplicity of heat exchange fins (10) for increasing the surface area.

8. The combined heat and power plant according to claim 7,
**characterized in**
**that** the heat exchange fins (10) are arranged in a rim-like manner around a fin-free surface region (11) of the heater head (5).

9. The combined heat and power plant according to claim 7 or claim 8,
**characterized in**
**that** the fin-free surface region (11) of the heater head (5) is formed to be thermally connected to an outer side of a combustion chamber wall (12).

10. The combined heat and power plant according to any one of the claims 1 to 9,
**characterized in**
**that** on the side facing away from the heater head, the combustion chamber (2) is provided with an opening (13) to the exhaust flue (3).

## Revendications

1. Installation de production combinée de chaleur et d'électricité comprenant une chaudière (1) avec une chambre de combustion (2) pour brûler un carburant, un conduit des gaz d'échappement (3) étant placée après la chambre de combustion (2) vue dans le sens d'écoulement pour évacuer un gaz d'échappement généré lors de la combustion et un moteur Stirling (4) avec une tête de réchauffeur (5) constituée pour l'échange de chaleur avec le gaz d'échappement, la tête de réchauffeur (5) étant constituée montée après le conduit de gaz d'échappement (3), vue dans le sens d'écoulement principal du gaz d'échappement, un brûleur (14) étant disposé à une extrémité de la chambre de combustion (2),
**caractérisée en ce que**
la tête de réchauffeur (5) est disposée à l'autre extrémité de la chambre de combustion (2).

2. Installation de production combinée de chaleur et d'électricité selon la revendication 1,
**caractérisée en ce que**
pour empêcher un échange de chaleur entre le gaz d'échappement et la tête de réchauffeur (5), un élément d'isolement (6) est placé entre le conduit de gaz d'échappement (3) et la tête de réchauffeur (5).

3. Installation de production combinée de chaleur et d'électricité selon la revendication 1 ou 2,
**caractérisée en ce que**
la tête de réchauffeur (5) est constituée entourée d'une chambre (8) munie d'ouvertures (7).

4. Installation de production combinée de chaleur et d'électricité selon la revendication 3,
**caractérisée en ce que**
le conduit de gaz d'échappement (3) est constitué comme pouvant être relié à la chambre (8) par les ouvertures (7).

5. Installation de production combinée de chaleur et d'électricité selon une quelconque des revendications 1 à 4,
**caractérisée en ce que**
la tête de réchauffeur (5) du moteur Stirling (4) est disposée entre le conduit de gaz d'échappement (3) et un échangeur de chaleur auxiliaire (9).

6. Installation de production combinée de chaleur et d'électricité selon la revendication 5,
**caractérisée en ce que**
l'échangeur de chaleur auxiliaire (9) est disposé à l'extrémité côté tête de réchauffeur de la chambre de combustion (2).

7. Installation de production combinée de chaleur et d'électricité selon une quelconque des revendications 1 à 6,
**caractérisée en ce que**
la tête de réchauffeur (5) comporte une pluralité de lamelles de transfert de chaleur (10) pour accroître la surface.

8. Installation de production combinée de chaleur et d'électricité selon la revendication 7,
**caractérisée en ce que**
les lamelles de transfert de chaleur (10) sont disposées en forme de couronne autour d'une zone de surface (11) sans lamelle de la tête de réchauffeur (5).

9. Installation de production combinée de chaleur et d'électricité selon la revendication 7 ou 8,
**caractérisée en ce que**
la zone de surface (11) sans lamelle de la tête de réchauffeur (5) est constituée thermiquement en contact avec un côté extérieur d'une paroi de chambre de combustion (12).

10. Installation de production combinée de chaleur et d'électricité selon une quelconque des revendications 1 à 9,
**caractérisée en ce que**
la chambre de combustion (2) est, munie à l'opposé de la tête de réchauffeur, d'une ouverture (13) vers le conduit de gaz d'échappement (3).
